# EUROPEAN PATENT APPLICATION

(11) **EP 2 466 896 A2**
(43) Date of publication of application: **20.06.2012**
(21) Application number: 11009529.6
(22) Date of filing: 01.12.2011
(51) Int. Cl.: H04N 9/31

(54) **Integrated camera-projection device**

(30) Priority: 17.12.2010 US 971022
(71) Applicant: Sony Ericsson Mobile Communications AB, 221 88 Lund (SE)
(72) Inventor: Sassi, Jari, 22657 Lund (SE)
(74) Representative: Banzer, Hans-Jörg

(57) **Abstract**

A projector (16) for projecting media, such as video and images, comprises an integrated camera. The camera can capture an image of a subject external to the projector (16), as well as an image of the media being projected. To capture these images, a controller (16) dynamically changes the orientation of one or more reflective members of a Digital Micromirror Device (DMD) (20) within the projector (16).

## Description

### FIELD OF THE INVENTION

The present invention relates generally to projectors having integrated camera circuitry, and more particularly, to integrated camera-projection devices configured to capture one or more images for use in performing gesture detection and auto-focus functions.

### BACKGROUND

Conventional camera-projection devices project media, such as video and images, onto an external display surface as well as capture images. In some cases, such devices capture images of the projected media for image processing. For example, some devices analyze captured images of the projected media to detect a gesture that is in or is illuminated by the projected media. The gesture may be made, for example, by a part of a person's body, such as a person's hand, or by a tool or other indicator. In addition to gesture detection, such devices can also analyze the captured images and utilize the information gleaned from the analysis to control some of the functions or features of the device, such as an auto-focus function. Further, these captured images can be utilized in computer vision algorithms.

Processing such images, however, can be problematic. For example, in some gesture detection algorithms, the image being captured should be aligned with the projected media so a computer program that "virtually" places an object into the projected media is able to place the object accurately. Additionally, many conventional gesture detection algorithms must filter the images to remove undesirable interference patterns, such as Moiré patterns, to ensure that the algorithm can accurately detect the gesture. Such processes become even more complicated when the projected media comprises a video. Moreover, in integrated systems, the addition of the digital camera circuitry required for capturing and processing the projected media can take significant space.

### SUMMARY

The present invention provides a method for capturing images as defined in claims 1 and 9, and an integrated camera-projection device as defined in claims 5 and 13. The dependent claims define preferred and advantageous embodiments of the invention.

The present invention provides a device and method for capturing images of projected media using devices that integrate both projection circuitry and digital camera circuitry within the same housing or module. The captured images are then analyzed and utilized for a variety of different purposes such as gesture detection and auto-focus control.

In one embodiment, the projection circuitry projects media onto an external display surface, such as a wall. Periodically, the device temporarily suspends projecting the media so that the camera circuitry can capture an image of a subject proximate the display surface. Once the image is captured, media projection resumes, and the resultant captured image analyzed to determine whether a gesture is being made. In another embodiment, the device does not suspend media projection. Instead, the camera circuitry is configured to capture an image of the media being projected while the projection circuitry is projecting the media.

To address the problems associated with capturing images of projected media, the device dynamically re-configures one of its components. The exact re-configuration of the component depends on whether the device is capturing an image of a subject that is external to the device (e.g., a person making a hand gesture proximate the display surface), or whether the device is capturing an image of the actual media being projected. For example, to capture the image of a person making gestures near a projected image, the device orients one or more reflective members (e.g., mirrors) of a Digital Micromirror Device (DMD), while media projection is suspended, to focus ambient light entering the device onto an image sensor within the housing of the device. The captured image can then be analyzed to detect the gesture. To capture an image of the media that is actually being projected, the device orients one or more reflective members to direct at least some of the light associated with the projected media onto the image sensor without suspending the projection function. Such images can then be analyzed and the information gleaned from them used to control auto-focus functions.

Therefore, in accordance with one or more embodiments of the present invention, a method of capturing images using an integrated camera-projection device comprises projecting media through a lens assembly at a predetermined frame rate, temporarily suspending projecting the media, and capturing an image based on light entering the lens assembly while projection is suspended.

In one embodiment, projecting the media at the predetermined frame rate comprises orienting a plurality of reflective members on a Digital Micromirror Device (DMD) to reflect light associated with the projected media through the lens assembly.

In one embodiment, temporarily suspending projecting the media comprises re-orienting one or more of the DMD reflective members to reflect the light entering the lens assembly onto an image sensor during one or more selected frames.

In one embodiment, capturing an image while projection is suspended comprises detecting the light at the image sensor during the one or more selected frames.

In one embodiment, the method further comprises resuming the projection of the media at the predetermined frame rate after the image has been captured.

In one embodiment, the method further comprises processing the captured image to detect a gesture being performed proximate an external display surface.

In one embodiment, determining whether to project a current frame of media, or whether to suspend projecting the media for the current frame, based on the frame.

In one embodiment, the method further comprises selecting one or more frames of the media in which to temporarily suspend projecting the media.

In one embodiment, capturing an image based on light entering the lens assembly while projection is suspended comprises orienting a first set of the one or more of the DMD reflective members to direct light from a light source through the lens assembly to illuminate a subject of the image, and orienting a second set of the one or more DMD reflective members to reflect the light entering the lens assembly onto an image sensor to capture the image.

In one embodiment, the light directed by the first set of one or more DMD reflective members comprises one or both of a white light and an Infra Red (IR) light.

The present invention also provides an integrated camera-projection device comprising a lens assembly, a projection circuit configured to project media through the lens assembly at a predetermined frame rate, an image sensor configured to capture an image based on light entering the camera-projection device through the lens assembly, and a controller configured to control the projection circuit to temporarily suspend projecting the media, and control the image sensor to capture the image while projection is suspended.

In one embodiment, the projection circuit comprises a Digital Micromirror Device (DMD) having a plurality of movable reflective members.

In one embodiment, the controller is configured to orient one or more of the DMD reflective members between a first orientation to reflect light associated with the projected media through the lens assembly, and a second orientation to reflect the light entering the lens assembly onto the image sensor while projection is suspended.

In one embodiment, the image sensor is configured to detect the light entering the lens assembly during one or more selected frames.

In one embodiment, the controller is further configured to control the projection circuit to resume projecting the media at the predetermined frame rate after the image has been captured.

In one embodiment, the device further comprises an image processor connected to the image sensor, and configured to process the captured image to detect a gesture being performed proximate an external display surface.

In one embodiment, the controller is further configured to determine, based on a current frame of media, whether to project the current frame, or whether to suspend projecting the media for the current frame.

In one embodiment, the controller is further configured to select one or more frames in which to temporarily suspend projecting the media.

In one embodiment, the controller is further configured to orient a first set of the one or more of the DMD reflective members to direct light from a light source through the lens assembly to illuminate a subject of the image, and orient a second set of the one or more DMD reflective members to reflect the light entering the lens assembly onto an image sensor to capture the image.

In one embodiment, the device further comprises one or more light sources configured to project one or both of a whit light and an Infra Red (IR) light onto the first set of the one or more of the DMD reflective members.

The present invention also provides a method of capturing images using an integrated camera-projection device comprises directing light associated with projected media onto a Digital Micromirror Device (DMD) having a plurality of movable reflective members, orienting a first set of one or more DMD reflective members in a first orientation to reflect the light through a lens assembly to project the media, and orienting a second set of one or more DMD reflective members in a second orientation to reflect the light towards an image sensor to capture an image of the projected media.

In one embodiment, orienting the second set of one or more DMD reflective members comprises moving the second set of one or more DMD reflective members from the first orientation to the second orientation during one or more selected frames to reflect the light onto the image sensor.

In one embodiment, the method further comprises re-orienting the second set of one or more reflective members from the second orientation to the first orientation to project the media after the image is captured at the image sensor.

In one embodiment, the second set of one or more DMD reflective members reflects the light onto the image sensor while the first set of one or more DMD reflective members reflects the light through the lens assembly.

In one embodiment, the method further comprises processing the captured image to calculate a distance between a subject of the image and the camera-projection device.

In one embodiment, the method further comprises controlling an auto-focus function of the camera-projection device based on the calculated distance.

The present invention also provides a camera-projection device comprising a lens assembly configured to focus light associated with projected media onto an external display surface, a Digital Micromirror Device (DMD) comprising a plurality of movable reflective members configured to reflect the light through the lens assembly, and an image sensor configured to capture an image of the projected media based on the light reflected by the DMD reflective members.

In one embodiment, the device further comprises a controller connected to the DMD and configured to orient a first set of one or more DMD reflective members to direct the light through the lens assembly, and orient a second set of one or more DMD reflective members to direct the light towards the image sensor.

In one embodiment, the controller is further configured to orient the second set of one or more DMD reflective members to direct the light towards the image sensor during one or more selected frames.

In one embodiment, the second set of one or more DMD reflective members directs the light toward the image sensor while the first set of one or more DMD reflective members directs the light through the lens assembly.

In one embodiment, the controller is further configured to re-orient the second set of one or more reflective members after the image is captured to direct the light through the lens assembly.

In one embodiment, the device further comprises an image processor configured to process the captured image to calculate a distance between a subject in the image and the camera-projection device.

In one embodiment, the device further comprises a controller to control an auto-focus function of the integrated camera-projection device based on the calculated distance.

In another embodiment, a camera-projection device comprises a lens assembly, an image sensor, and a Digital Micromirror Device (DMD) having a plurality of reflective members configured to direct light from a first set of one or more reflective members through the lens assembly and onto an external display surface, and direct light from a second set of one or more reflective members onto a surface of the image sensor.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1 is a perspective view of a camera-projection device configured according to one embodiment of the present invention projecting media on an external display surface.

Figure 2 is a block diagram illustrating some of the components of the camera-projection device and their respective functions according to one embodiment of the present invention.

Figure 3 is a flow diagram illustrating a method of performing one embodiment of the present invention.

Figure 4 is a block diagram illustrating some of the components of the camera-projection device and their respective functions according to another embodiment of the present invention.

Figure 5 is a flow diagram illustrating a method of performing another embodiment of the present invention.

### DETAILED DESCRIPTION

The present invention provides a device that integrates both projection circuitry and digital camera circuitry within the same module or housing. Particularly, a camera-projection device comprises projection circuitry for projecting media, such as video and images, as well as camera circuitry for capturing images. The images captured may be, for example, the projected media and/or objects or people located near a display surface on which the media is projected. The captured images are then analyzed and used for a variety of different purposes such as gesture detection and auto-focus control.

To mitigate some or all of the issues related to capturing images of projected media, the present invention dynamically re-configures an electronic component within the camera-projection device based on the analysis to be performed on the captured images. For example, for gesture detection applications, the device configures the reflective members of a Digital Micromirror Device (DMD) to direct the light associated with the media being projected through a lens assembly and onto an external display surface. The reflective members, which may comprise mirrors, for example, are individually movable such that a controller can dynamically move the members between a plurality of orientations. Periodically, the device suspends the projection of the media for one or more selected frames to allow ambient light to enter the device through the lens assembly. While projection is suspended, which may be for one or more selected frames, the device re-orients one or more of the reflective members to direct the light entering the lens assembly towards an image sensor. After the image is captured, the re-oriented reflective members are returned to their previous orientations to once again project the media by directing the light associated with the media through the lens assembly. The resultant images may then be analyzed, and the information used in gesture detection and/or other computer vision algorithms.

Capturing images for gesture detection is not the only use for the device. Rather, the camera-projection device may be utilized to control its own auto-focus function and/or other features. In these embodiments, the device does not suspend the projection of the media, but instead, continues to render the media by directing the media light from the reflective members through the lens assembly. However, periodically, a controller will control the DMD to temporarily re-orient at least some of the reflective members such that they also direct the light associated with the media being projected onto the image sensor. Such re-orientation allows the camera-projection device to capture a more accurate image of the media being projected. Once captured, the images can be analyzed and used to determine movement of and/or distance to a subject in the image, thereby permitting the control of a function of the device such as an auto-focus function.

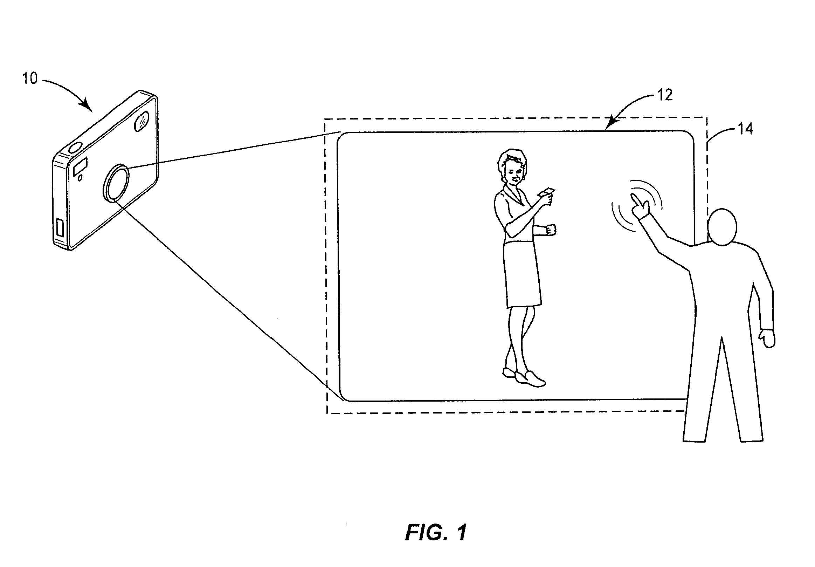

Figure 1 is a perspective view of a camera-projection device 10 configured according to one embodiment of the present invention. Device 10 integrates the functions of both a digital camera and a projector. In this embodiment, the projector is configured to project media 12 onto a flat wall, while the camera is configured to capture an image of a person standing proximate the projected media 12.

Generally, the camera can capture an image of subjects or objects that are within its field of view 14. In this embodiment, the camera will capture images of a gesture being made within the field of view 14. The gestures may be any gesture known in the art and be made by any object; however, in one embodiment, the gestures are made by a part of a person's body. For example, as seen in Figure 1, the gestures are hand gestures that point or draw attention to certain objects or items in the projected media 12. In another embodiment, however, the gesture is made by a tool or other indicator that is in or illuminated by the projected media 12, and that is controlled and/or operated by a user.

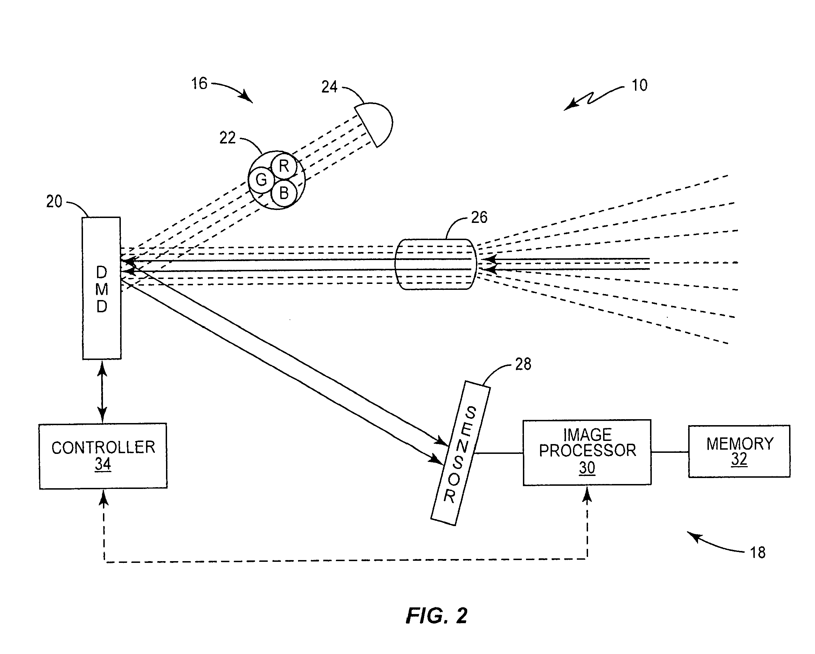

Figure 2 is a block diagram illustrating some of the components of the device 10. Particularly, device 10 comprises projector circuitry 16 and camera circuitry 18. The projector circuitry 16 comprises a Digital Micromirror Device (DMD) 20, a color filter 22, and a light source 24. The camera circuitry 18 comprises an image sensor 28, an image processor 30, memory 32, and a controller 34. Both of the projection circuitry 16 and the camera circuitry 18 utilize a common lens assembly 26. Particularly, the lens assembly 26 may be used by the projection circuitry 16 to focus light associated with the media onto the external display surface. The lens assembly 26 may also be used by the camera circuitry 18 to focus ambient light entering the device 10 onto the DMD 20. With the ambient light, the camera circuitry 18 can capture an image.

The DMD 20 provides a clear, readable image of the media being projected. More particularly, the DMD 20 comprises a plurality of microscopic reflective members (e.g., mirrors) arranged in a rectangular array on the surface of a semi-conductor chip. Each mirror represents a single pixel in the projected media, with the resolution of the projected media corresponding to the number of mirrors on the DMD 20. Generally, a single DMD 20 may contain about 2,000,000 mirrors, each of which is individually movable or positionable into a plurality of orientations.

In one embodiment, each of the mirrors in the DMD 20 is individually hinged to move or tilt forwards and backwards through an angle of about 10-12°. This enables each mirror in the matrix to function as a "light switch" that either reflects light towards the lens assembly 26, or reflects light away from the lens assembly 26. Particularly, according to one embodiment of the present invention, each mirror can be individually (or collectively) oriented between a first orientation and a second orientation. In the first orientation, the mirrors direct the light through the lens assembly 26 for focusing onto an external display surface. In the second orientation, the mirrors direct light onto the image sensor 28.

The light source 24 emits the light associated with the media to be projected, and is directed onto the reflective members of DMD 20. In one embodiment, the light source 24 comprises red, green, and blue Light Emitting Diodes (LEDs) that emit colored light. In other embodiments, however, the light source 24 comprises a mercury vapor lamp or similar lamp that emits white light. White light, however, is capable of producing only grayscale images. Therefore, in such embodiments, the light emitted by light source 24 is first passed through color filter 22. The color filter 22 may comprise, for example, a color wheel. The color filter 22 is typically configured to filter the white light emitted by light source 24 into red, green, and blue colors. In some embodiments, however, additional colors may also be used. Specifically, the color filter 22 may also be configured to filter the light from light source 24 into cyan, magenta, and yellow.

The image sensor 28, which may comprise any image sensor known in the art, detects light. Particularly, as is known in the art, the image sensor 28 generates electrical signals responsive to the light that is detected striking its surface. These signals are sent to an image processor 30 for processing. For example, the electrical signals sent to the image processor 30 represent the pixels of a captured image. The image processor 30 can process these signals to determine certain information about the image, or store the signals in memory 32 for later processing.

The controller 34 comprises a programmable microprocessor configured to control the DMD 20. Specifically, the controller generates control signals that, when received by the DMD 20, are used to move the DMD 20 mirrors between one or more orientations. The controller 34 can, for example, generate a control signal to move all DMD 20 mirrors to the same orientation, or move a first group of one or more selected mirrors to a first orientation, and a second group of one or more selected mirrors to a second orientation. Which mirrors are moved to which orientations may be determined using any method known in the art. However, in this embodiment, the controller 34 generates the control signals required to dynamically reconfigure the DMD 20 mirrors to either project media through the lens assembly 26, or to suspend projection to direct the ambient light entering the lens assembly 26 to the image sensor 28 while media projection is suspended. Further, the controller 34 is configured to dynamically generate the control signals extremely quickly such that the DMD 20 mirrors may, if necessary, move between the first and second orientations within the span of a frame of media.

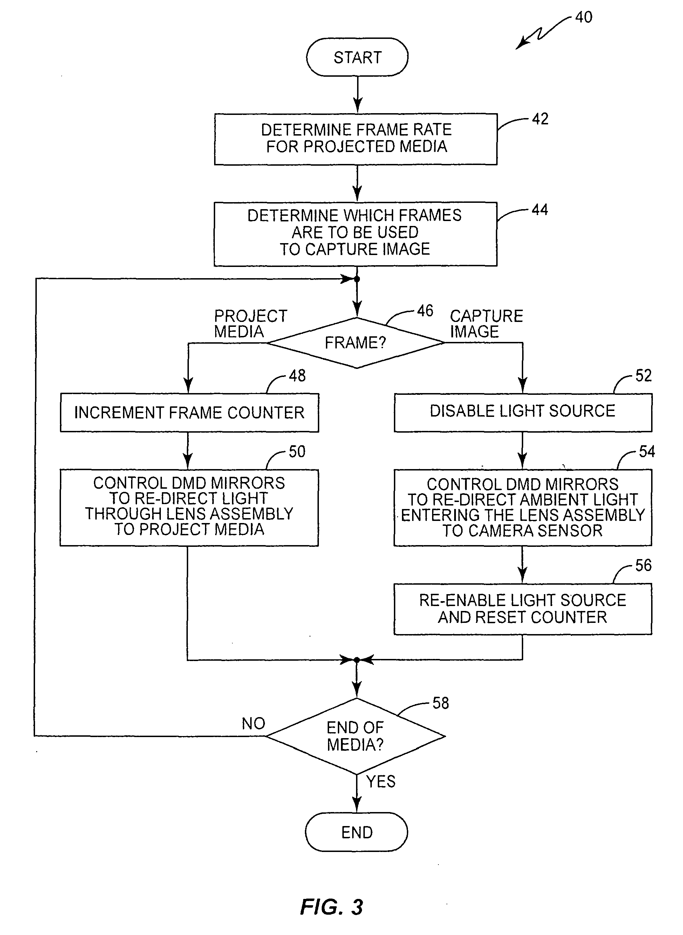

Figure 3 is a flow diagram illustrating a method 40 in which the device 10 is configured to recognize gestures according to one embodiment of the present invention. Method 40 begins by determining a frame rate for the media to be projected (box 42). The media may be projected at any rate needed or desired, and may be determined using any known method. However, for illustrative purposes only, the frame rate at which the media is projected is 120 frames/second.

Once the frame rate is determined, the controller 34 determines which frames will be used to project the media, and which frame or frames will be used to capture images (box 44). As above, this determination may be accomplished using any known method; however, in one embodiment, the controller 34 selects every 120^{th} frame, thereby effectively capturing an image every second. In a more complex embodiment, the controller 34 determines the selected frame as a percentage of the frame rate. Particularly, controller 34 can calculate the number of frames that projected within some predetermined time period (e.g., a minute), and then calculates a percentage of those frames to obtain a frame number value. The controller 34 would then capture an image for gesture detection each time that frame number value becomes the current frame to be projected.

For example, a frame rate of 120 frames/second translates to 7200 frames/minute. The controller 34 could calculate a percentage of these frames (e.g., 10%) to obtain the frame number value (i.e., 7,200 * 10% = 720). The controller 34 could increment a counter, for example, each time a frame of media is projected. While the counter is not equal to 720 (box 46), the controller 34 would increment the counter (box 48) and control the DMD 20 mirrors to move (or remain) in a first orientation (box 50). In this first orientation, the DMD 20 mirrors would reflect light emitted from the light source 24 through the lens assembly 26 to be focused on the external display surface. However, at every 720^{th} frame (box 46), the controller 34 would generate the control signals required to capture an image instead of projecting the media.

Particularly, each time the counter reached 720, the controller 34 would temporarily disable the light source 24 (box 52) to effectively "suspend" projection of the media, and generate a control signal to move the DMD 20 mirrors from the first orientation to a second orientation (box 54). With projection suspended, the ambient light would be permitted to enter the interior of device 10 through the lens assembly 26. The ambient light entering the interior of device 10 would then be directed by the DMD 20 mirrors in the second orientation towards the image sensor 28, where it would capture an image of a subject or object proximate the projected image 12 (box 54). Once captured, the image could be stored or processed to detect a gesture being made proximate the projected image. The controller 34 would also reset the counter and generate the control signals needed to re-enable the light source 24 (box 56). The method 40 would continue until the last frame of media was projected or captured (box 58).

Using the present invention to capture images for gesture detection provides both structural and functional benefits and advantages that conventional devices cannot provide. For example, integrating the projection circuitry 16 and the camera circuitry 18 facilitates the manufacture of smaller and smaller devices. Additionally, there is little or no need to adjust for distance because the distance is already known. Particularly, the distance between the device 10 and the projected image 14 is known. Since the subject of the image is located proximate the projected image 14, the distance between the device 10 and the subject is also known. Thus, there is a reduced need to continually alter focus.

Another advantage is that the captured image will not be negatively influenced by the projected media 14. For example, it is expected that at least some of the ambient light from the projected image 14 would be comprised of residual light from the projected media 14. Such steady lighting provides a stable lighting background on which to capture the images. Further, a stable lighting background means that device 10 requires little or no effort to calibrate the light sensor 28 to the amount of ambient light. As such, gesture detection algorithms can detect gestures more easily and have a reduced need to filter the images.

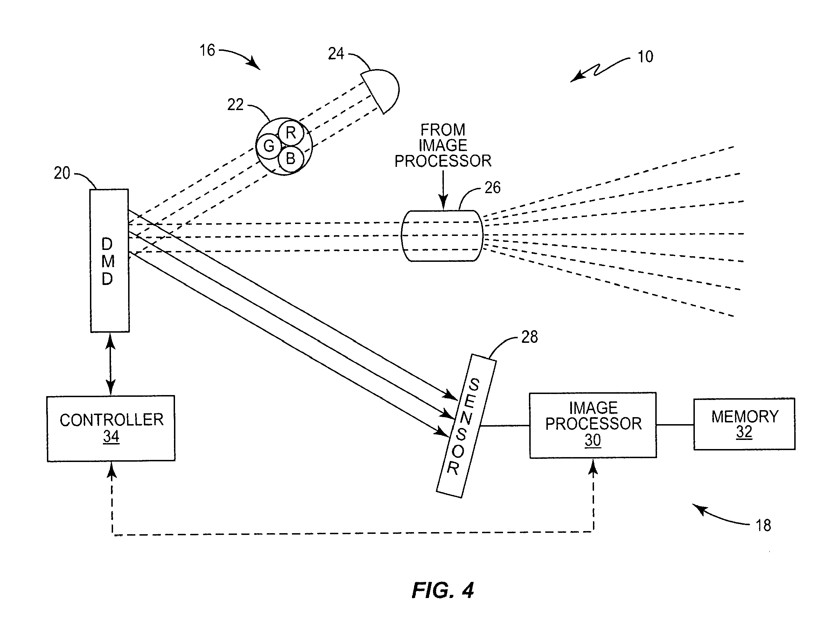

Figure 4 is a block diagram illustrating device 10 as it might be configured to control an auto-focus function according to one embodiment. With the exception of the DMD 20 and controller 34, the components of Figure 4 perform the same functions as those previously described in Figure 2.

As seen in Figure 4, the DMD 20 mirrors still receive a colored light from light source 24 and color filter 22, and the controller 34 still controls one or more of the DMD 20 mirrors to move to the first orientation to direct that light through the lens assembly 26 for projection onto the display surface. However, in this embodiment, the controller 34 generates the control signals to move only a first subset of the DMD 20 mirrors into the first orientation. A second set of one or more different DMD 20 mirrors are controlled to move into the second orientation where they can direct the light from light source 24 towards the image sensor 28. In this manner, the projection circuitry 16 can project the media at the same time that the camera circuitry 18 captures images of the media. This allows the image sensor 28 to capture an image of the media that is being projected without having to actually capture an image of the projected media 14. This provides several benefits over those devices that capture images of the projected media by taking pictures of the external display on which the media is projected.

For example, when media is projected on an external display surface, the edges of the projection are typically blurred. Therefore, any images captured of such projections will also have blurred edges. This can hinder or complicate the analysis used to control some functions of a device such as auto-focus. However, with the present invention, the DMD 20 mirrors reflect the media being projected before it travels through the lens assembly. Therefore, the edges are sharp and clear. Thus, when directed towards the image sensor 28, the resultant image is also sharp. This allows for the image processor 30 to more accurately compare a plurality of sequentially captured images of the media and take the best (i.e., sharpest) image for analysis. Because the image processor 30 utilizes a sharper image for analysis, it can more accurately control the functions of the device 10, such as the auto-focus function.

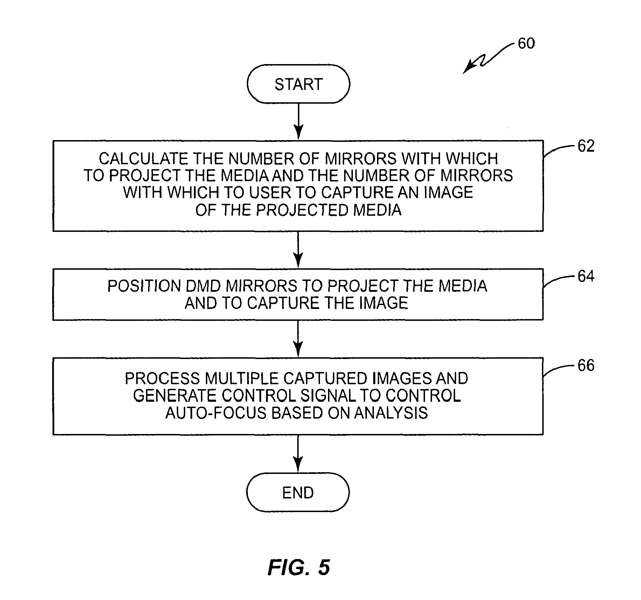

Figure 5 illustrates an exemplary method 60 in which device 10 controls it's own auto-focus function based on the captured images of the projected media reflected towards the image sensor 28 by the DMD 20 mirrors. Method 60 begins with the controller 34 calculating the number of mirrors with which to project the media through the lens assembly 26, and the number of mirrors with which to use to capture the image of the projected media (box 62). The DMD 20 mirrors may be partitioned according to any known method, but in one embodiment, 50% of the mirrors are used to project the image onto the external display surface and 50% of the mirrors are utilized to capture an image of the projected media.

The controller 34 then generates the appropriate control signals to move the first subset of mirrors to the first orientation, wherein the mirrors direct the light emitted by the light source 24 through the lens assembly 26. The controller 34 also generates the appropriate control signals to move the second set of mirrors to the second orientation, wherein the mirrors direct the light emitted by the light source 24 away from the lens assembly 26 and towards the image sensor 28 (box 64). The image sensor 28 captures the image of the projected media as the media is reflected by the second set of mirrors. The image processor 30 then analyzes multiple images, i.e., a sequence of images, and uses the analysis to control the auto-focus function (box 66). Particularly, the distance from the device 10 to the display surface is known. Based on the analysis of the processed captured image(s), the image processor 30 could employ well-known mathematical techniques to determine whether an object is moving, as well as the distance to the object. The image processor 30 could then generate one or more signals to control the lens assembly 26 to alter its focus based on the changes in distance.

The present invention may, of course, be carried out in other ways than those specifically set forth herein without departing from essential characteristics of the invention. For example, in one or more previous embodiments, the image sensor 28 captures an image in the time needed for projecting one or more frames of media. In some embodiments, the media projection may be suspended to allow ambient light to enter the lens assembly 26 and be detected by the image sensor 28. However, depending upon the frame rate, the "slice" of time provided by a frame may be very small. For example, at a frame rate of 120 frames/second, one frame would afford the image sensor just 1/120^{th} of a second.

For an image to be captured, enough light needs to strike the image sensor 26. Given the small amount of time in which the image sensor 26 has to capture the image, the image sensor 26 might need to be very sensitive, especially if there is little ambient light. Very sensitive image sensors, especially for hand-held communication devices, could be difficult to obtain or very expensive. Therefore, in another embodiment of the present invention, the controller 34 is programmed to control the DMD 20 to orient some of the mirrors in the first orientation and some of the mirrors in the second orientation. While the media projection is suspended, the mirrors in the first orientation would reflect white light emitted from the light source 24 through the lens assembly 26 to provide the ambient light needed to capture an image. The mirrors in the second orientation would direct the light entering the lens assembly 26 onto the image sensor 28 to capture the image.

Configuring the DMD 20 mirrors in this manner allows a device configured according to one embodiment of the present invention to project the light it needs to capture an image during the short time frames. The exact number of mirrors oriented in either the first or second orientation could be any number desired; but in one embodiment, 50% of the mirrors are in the first orientation and the remaining 50% are in the second orientation.

In another embodiment, the device 10 also comprises an Infra Red (IR) light source in addition to the white light source. The IR light source could be controlled to emit IR light along with the white light and/or the light associated with the projected media. The use of IR light would allow the image sensor 28 to better detect, and capture, the skin color of a person for use in gesture detection, and would improve the image being captured. The light emitted would be controlled to consume as little power as possible, which is an important consideration for portable devices, such as cellular telephones.

Therefore, the present embodiments are to be considered in all respects as illustrative and not restrictive, and all changes coming within the meaning and equivalency range of the appended claims are intended to be embraced therein

## Claims

1. A method of capturing images using an integrated camera-projection device (10), the method comprising:
projecting media (12) through a lens assembly (26) at a predetermined frame rate;
temporarily suspending projecting the media (12); and
capturing an image based on light entering the lens assembly (26) while projection is suspended.

2. The method of claim 1 further comprising processing the captured image to detect a gesture being performed proximate an external display surface.

3. The method of any one of claims 1-2 further comprising determining whether to project a current frame of media (12), or whether to suspend projecting the media (12) for the current frame, based on the frame.

4. The method of any one of claims 1-3 further comprising selecting one or more frames of the media (12) in which to temporarily suspend projecting the media (12).

5. An integrated camera-projection device (10) comprising:
a lens assembly (26);
a projection circuit (16) configured to project media (12) through the lens assembly (26) at a predetermined frame rate;
an image sensor (28) configured to capture an image based on light entering the camera-projection device (10) through the lens assembly (26); and
a controller (34) configured to:
control the projection circuit (16) to temporarily suspend projecting the media (12); and
control the image sensor (28) to capture the image while projection is suspended.

6. The device (10) of claim 5 wherein the projection circuit (16) comprises a Digital Micromirror Device (DMD) (20) having a plurality of movable reflective members, and wherein the controller (34) is configured to orient one or more of the DMD reflective members between a first orientation to reflect light associated with the projected media (12) through the lens assembly (26), and a second orientation to reflect the light entering the lens assembly (26) onto the image sensor (28) while projection is suspended.

7. The device (10) of any one of claims 5-6 wherein the controller (34) is further configured to control the projection circuit (16) to resume projecting the media (12) at the predetermined frame rate after the image has been captured.

8. The device (10) of any one of claims 5-7 wherein the controller (34) is further configured to:
orient a first set of the one or more of the DMD reflective members to direct light from a light source (24) through the lens assembly (26) to illuminate a subject of the image; and
orient a second set of the one or more DMD reflective members to reflect the light entering the lens assembly (26) onto an image sensor (28) to capture the image.

9. A method of capturing images using an integrated camera-projection device (10), the method comprising:
directing light associated with projected media onto a Digital Micromirror Device (DMD) (20) having a plurality of movable reflective members;
orienting a first set of one or more DMD reflective members in a first orientation to
reflect the light through a lens assembly (26) to project the media (12); and orienting a second set of one or more DMD reflective members in a second
orientation to reflect the light towards an image sensor to capture an image of the projected media (12).

10. The method of claim 9 wherein orienting the second set of one or more DMD reflective members comprises moving the second set of one or more DMD reflective members from the first orientation to the second orientation during one or more selected frames to reflect the light onto the image sensor (28).

11. The method of claim 9 further comprising re-orienting the second set of one or more reflective members from the second orientation to the first orientation to project the media after the image is captured at the image sensor (28).

12. The method of any one of claims 9-11 wherein the second set of one or more DMD reflective members reflects the light onto the image sensor (28) while the first set of one or more DMD reflective members reflects the light through the lens assembly (26).

13. A camera-projection device (10) comprising:
a lens assembly (26) configured to focus light associated with projected media (12) onto an external display surface;
a Digital Micromirror Device (DMD) (20) comprising a plurality of movable reflective members configured to reflect the light through the lens assembly (26); and
an image sensor (28) configured to capture an image of the projected media based on the light reflected by the DMD reflective members.

14. The device (10) of claim 13 further comprising a controller (34) connected to the DMD (20) and configured to:
orient a first set of one or more DMD reflective members to direct the light through the lens assembly (26); and
orient a second set of one or more DMD reflective members to direct the light towards the image sensor (28).

15. The device (10) of claim 13 or claim 14 further comprising:
an image processor (30) configured to process the captured image to calculate a distance between a subject in the image and the camera-projection device; and
a controller (34) to control an auto-focus function of the integrated camera-projection device based on the calculated distance.
